# FASCICULE DE BREVET EUROPEEN

(11) **EP 0 881 754 B1**
(45) Date de publication et mention de la délivrance du brevet: **02.01.2002**
(21) Numéro de dépôt: 98401279.9
(22) Date de dépôt: 28.05.1998
(51) Int. Cl.: H02K 9/28, H01R 39/38

(54) **Cage pour balai de moteur électrique à ailettes de refroidissement**
Bürstenhalter eines Elektromotors mit Kühlrippen
Electric motor brush holder with cooling fins

(30) Priorité: 30.05.1997 FR 9706708
(43) Date de publication de la demande: 02.12.1998
(73) Titulaire: VALEO SYSTEMES D'ESSUYAGE, 78321 La Verrière (FR)
(72) Inventeur: Autret, Alain, 78280 Guyancourt (FR); Rouleau, Blaise, 75014 Paris (FR); Salembere, Abdon, 60200 Compiegne (FR)
(74) Mandataire: Le Forestier, Eric

(56) Documents cités:
- EP-A- 0 418 135
- EP-A- 0 615 316
- FR-A- 2 427 711
- FR-A- 2 459 571
- FR-A- 2 699 749
- GB-A- 2 191 346

## Description

L'invention concerne les cages pour balai de moteur électrique.

On connaît d'après le document FR-A-2 699 749 une cage de balai réalisée par pliage d'un flan métallique et définissant un logement pour le guidage à coulissement d'un balai, et comportant des ailettes de refroidissement s'étendant au sommet de la cage. Les ailettes sont conformées et disposées pour avoir une importante surface de contact avec la cage et pour offrir une importante surface d'échange par convection avec l'air environnant. Toutefois, cette cage a pour inconvénient que le pliage du flan pour la fabrication de la cage est compliqué à effectuer. De plus, les possibilités pour conformer et disposer les ailettes demeurent limitées et ne permettent pas d'obtenir de bonnes performances de refroidissement.

Un but de l'invention est de fournir une cage dont la fabrication soit plus facile à effectuer et qui offre davantage de possibilités pour conformer et disposer au moins une ailette de refroidissement en vue d'améliorer les performances de refroidissement.

En vue de la réalisation de ce but, on prévoit selon l'invention une cage pour balai de moteur électrique définissant un logement pour un balai et comportant une ailette de refroidissement, la cage comportant une semelle métallique plane et une coiffe constituées par des pièces distinctes et définissant le logement.

Ainsi, la coiffe et la semelle sont réalisées séparément, ce qui facilite la fabrication de la cage. De plus, cette réalisation séparée offre une grande liberté pour conformer et disposer l'ailette en vue d'optimiser les performances de refroidissement.

Avantageusement, la semelle présente une dimension suivant une direction transversale perpendiculaire à une direction axiale de la coiffe au moins égale à deux fois une plus grande dimension de la coiffe suivant la direction transversale.

Ainsi, la semelle offre elle-même une grande surface d'échange thermique par convection avec l'air environnant.

Avantageusement, l'ailette s'étend à partir de la semelle.

Avantageusement, l'ailette s'étend dans un plan parallèle à une direction axiale de la coiffe.

Avantageusement, l'ailette s'étend dans un plan perpendiculaire à la semelle.

Avantageusement, la cage comporte une patte de butée fixée à la semelle et s'étendant dans un plan non parallèle à une direction axiale de la coiffe.

Ainsi, cette patte offre une butée pour retenir une extrémité enroulée sur elle-même d'un ressort à bande assurant le rappel du balai en direction d'un collecteur du moteur.

Avantageusement, la patte de butée présente deux faces planes non parallèles à une direction axiale de la coiffe et formant entre elles un angle obtus.

Ainsi, la patte assure un bon positionnement de l'extrémité enroulée du ressort à bande.

Avantageusement, la patte de butée est d'une seule pièce avec la semelle.

Avantageusement, la coiffe comporte deux parois latérales adaptées à s'étendre perpendiculairement à la semelle et présentant des échancrures s'étendant depuis une extrémité axiale de la coiffe.

Ainsi, ces échancrures permettent le passage du ressort à bande.

On prévoit également selon l'invention un sous-ensemble pour moteur électrique comprenant une cage, un balai adapté à être reçu à coulissement dans la cage et un ressort à bande pour le rappel du balai, dans lequel la cage est conforme à l'invention.

Il pourra s'agir d'une unité de balai comportant une cage et un balai, ou d'une platine portant plusieurs unités de balai de ce type.

On prévoit en outre selon l'invention un moteur électrique comportant une cage selon l'invention.

D'autres avantages de l'invention apparaîtront encore dans la description suivante d'un mode préféré de réalisation donné à titre d'exemple non limitatif. Aux dessins annexés :
- les figures 1, 2 et 3 sont des vues respectives de face, de gauche et de-dessus d'une coiffe d'une cage selon le présent mode de réalisation de l'invention;
- les figures 4 et 5 sont des vues respectives de face et de dessus d'une semelle destinée à être associée à la coiffe de la figure 1 ; et
- les figures 6 et 7 sont des vues partielles respectives en coupe transversale et de dessus d'une platine porte-balais portant une cage comprenant la coiffe de la figure 1 et la semelle de la figure 4.

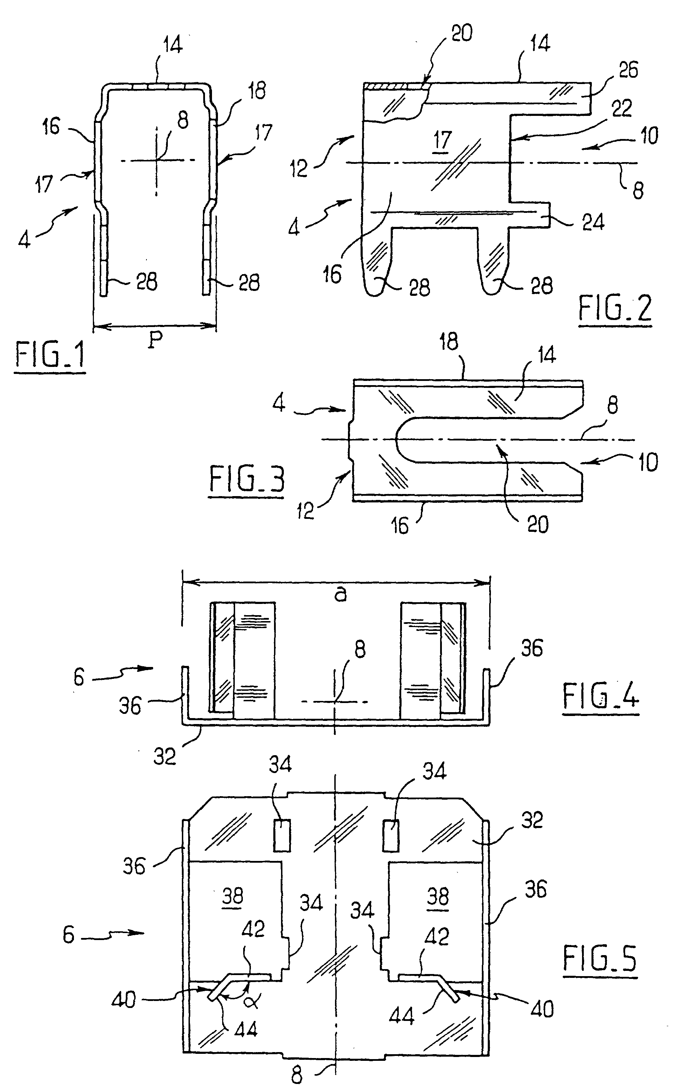

En référence aux figures 1 à 5, la cage 2 pour balai de moteur électrique selon l'invention comprend, dans le présent mode de réalisation, une coiffe 4 et une partie de semelle 6, toutes deux métalliques, ici en laiton. La coiffe 4 et la partie de semelle 6 sont chacune d'une seule pièce et fabriquées par découpe et pliage de deux flans respectifs en laiton. On va d'abord décrire la coiffe 4.

La coiffe 4 a une forme générale de parallélépipède rectangle. Elle présente une direction axiale 8 définissant une extrémité axiale avant 10 et une extrémité axiale arrière 12 de la coiffe. La coiffe 4 est profilée suivant cette direction. La coiffe comporte une paroi supérieure 14 et deux parois latérales gauche et droite 16, 18. Les directions verticale et horizontale, considérées ici par référence aux figures 1, 2 et 4, sont utilisées seulement pour la clarté de l'exposé. Il va de soi que l'orientation de la cage 2 dans le moteur pourra être quelconque. Les parois supérieure 14, gauche 16 et droite 18 ont chacune une forme générale rectangulaire. Les deux parois latérales 16, 18 s'étendent parallèlement l'une à l'autre en regard l'une de l'autre et perpendiculairement à la paroi supérieure 14. La paroi supérieure 14 présente une échancrure 20 s'étendant à partir de l'extrémité axiale avant 10 parallèlement à l'axe 8, pour le passage d'une tresse de connexion du balai fixée à celui-ci.

Les parois latérales 16, 18 présentent chacune un renflement orienté vers l'extérieur de la coiffe, de sorte qu'en profil transversal, une portion centrale 17 à profil rectiligne de ces parois est éloignée de l'axe 8 de la coiffe. Chaque paroi latérale 16, 18 présente une échancrure 22 s'étendant à partir de l'extrémité axiale avant 10 de la coiffe et s'interrompant avant la mi-distance entre les deux extrémités axiales de la coiffe. Ces échancrures 22 sont adaptées à recevoir un ressort de rappel à bande comme on le verra plus loin. Les renflements 17 ménagent dans la coiffe 4 les volumes nécessaires au positionnement du ressort. Ils améliorent également le refroidissement du balai reçu dans la coiffe 4.

Les parois latérales 16, 18 présentent une zone de base 24 définissant un côté horizontal inférieur de l'échancrure 22. Cette zone de base 24 est plus courte suivant l'axe 8 qu'une zone supérieure 26 de ces parois contiguë à la paroi supérieure 14. Chaque paroi latérale 16, 18 porte deux pattes 28 s'étendant perpendiculairement à l'axe 8 à partir d'un côté horizontal inférieur de la paroi en vue de la fixation de la coiffe 4 à la semelle 6, et de la cage 2 à une platine porte-balais.

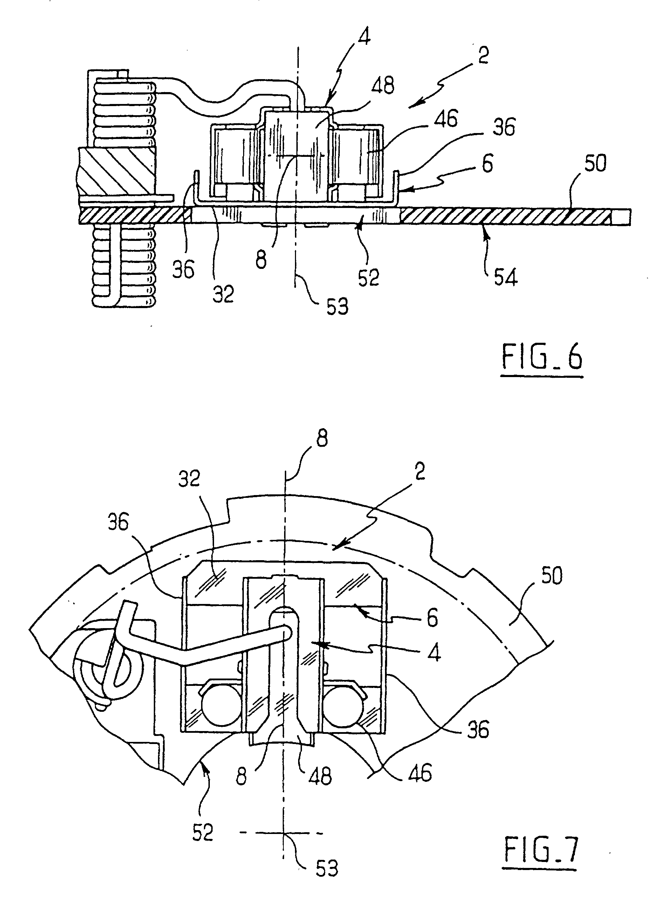

En référence aux figures 4 et 5, la partie de semelle 6 comporte une semelle plane 32 de forme générale rectangulaire en plan. La semelle 32 présente dans une zone centrale quatre orifices traversants rectangulaires 34 adaptés à recevoir respectivement les quatre pattes 28 de la coiffe 4. Les quatre orifices 34 sont disposés symétriquement de part et d'autre d'une direction axiale médiane 8 de la partie de semelle 6. La partie de semelle 6 comporte deux ailettes planes 36 s'étendant perpendiculairement à la semelle 32 et parallèlement à l'axe 8, à partir de deux côtés de la semelle 32 opposés et parallèles l'un à l'autre. Les deux ailettes 36 s'étendent en regard l'une de l'autre et sont parallèles entre elles. Chaque ailette 36 s'étend sur toute la longueur du côté associé de la semelle 32.

La semelle 6 présente deux jours 38 de forme générale rectangulaire en plan, ayant un côté contigu respectivement aux ailettes 36, les jours étant disposés symétriquement l'un de l'autre par rapport à l'axe 8. Deux des orifices 34 débouchent dans les jours 38 associés. La partie de semelle 6 comporte deux pattes de butée 40 d'une seule pièce avec la semelle. Chaque patte 40 comporte une paroi 42 s'étendant à partir d'un bord transversal avant d'un jour 38 respectif, en étant perpendiculaire à l'axe 8 et à la semelle 32. La patte 40 comporte une autre paroi 44 perpendiculaire à la semelle 32, inclinée par rapport à l'axe 8 en direction de celui-ci et ayant un côté vertical en commun avec la paroi 42. Les deux parois 42, 44 sont disposées de sorte qu'elles présentent deux faces définissant un angle obtus a. Les deux pattes 40 sont réalisées par découpe dans les jours 38 associés, puis pliage. La coiffe 4 présente un plan de symétrie passant par l'axe 8. Il en est de même pour la partie de semelle 6.

En références aux figures 6 et 7, pour réaliser une platine porte-balais 50, on fabrique une unité de balai de la façon suivante.

On réalise par découpe et pliage une coiffe 4 et une partie de semelle 6. On fixe ensuite la coiffe 4 à la partie de semelle 6 en introduisant les pattes de fixation 28 dans les orifices 34 de la semelle 32. La coiffe 4 et la semelle 32 définissent ainsi un logement dans lequel le balai 48 pourra être mobile à coulissement. Puis on introduit un ressort à bande 46 dans les échancrures 22 de sorte que les deux extrémités enroulées du ressort viennent en appui contre les faces précitées des pattes de butée 40 respectives. On engage ensuite un balai 48 dans la coiffe 4 par l'extrémité axiale avant 10 en poussant la portion médiane du ressort 46 dans la coiffe.

On fournit ensuite une platine 50, ici en bakélite de forme circulaire plane et présentant un orifice circulaire 52 en son centre. La platine est destinée à porter plusieurs cages 2 telles que précitées. Chaque cage 2 est fixée à la platine de sorte que son axe 8 est radial à un axe 53 de l'orifice 52 de la platine. Le bord avant de la paroi supérieure 14 de la coiffe 4 s'étend au droit du bord de l'orifice 52. La zone de base 24 des parois latérales 16, 18 est donc en retrait de l'orifice 52. Les pattes 28 pénètrent dans des orifices traversants de la platine destinés à cette fin et émergent en saillie d'une face 54 de la platine opposée à la cage. La semelle 32 réalise un contact surface contre surface avec la platine.

Les ailettes 36 s'étendent en regard et à distance des parois latérales 16, 18 respectives de la coiffe, parallèlement à celles-ci. La semelle 32 et les ailettes 36 font office de dissipateur thermique et assurent le refroidissement par convection d'air de la cage 2, chauffée par le balai 48. La cage 2 offre ainsi une grande surface d'échange thermique avec l'air environnant. La partie de semelle 6 présente une plus grande dimension a (ou largeur) suivant une direction perpendiculaire à l'axe 8 et parallèle à la semelle 32, au niveau des ailettes 36. La coiffe 4 présente une plus grande dimension p (ou largeur) suivant la même direction, c'est-à-dire suivant une direction perpendiculaire à l'axe 8 et parallèle à la paroi supérieure 14. Ici, la dimension a vaut environ trois fois la dimension p.

En l'espèce, la platine porte-balais 50 est destinée à faire partie d'un moteur électrique de véhicule automobile tel qu'un motoréducteur d'essuyage, un moteur de refroidissement, ou un moteur lève-vitre.

Bien entendu, on pourra apporter à l'invention de nombreuses modifications sans sortir du cadre de celle-ci.

Les pattes de butée 40 pour les extrémités enroulées du ressort à bande 46 pourront être reliées aux ailettes 36 en étant réalisées par découpe et pliage de celles-ci.

## Revendications

1. Cage (2) pour balai de moteur électrique définissant un logement pour un balai (48) et comportant une ailette de refroidissement (36), **caractérisée en ce que** la cage comporte une semelle métallique plane (32) et une coiffe (4) définissant le logement et constituées par des pièces distinctes.

2. Cage selon la revendication 1, **caractérisée en ce que** la semelle (32) présente une dimension (a) suivant une direction transversale perpendiculaire à une direction axiale (8) de la coiffe (4) au moins égale à deux fois une plus grande dimension (p) de la coiffe (4) suivant la direction transversale.

3. Cage selon la revendication 1 ou 2, **caractérisée en ce que** l'ailette (36) s'étend à partir de la semelle (32).

4. Cage selon l'une quelconque des revendications 1 à 3, **caractérisée en ce que** l'ailette (36) s'étend dans un plan parallèle à une direction axiale (8) de la coiffe (4).

5. Cage selon l'une quelconque des revendications 1 à 4, **caractérisée en ce que** l'ailette (36) s'étend dans un plan perpendiculaire à la semelle (32).

6. Cage selon l'une quelconque des revendications 1 à 5, **caractérisée en ce que** la cage (2) comporte une patte de butée (40) fixée à la semelle (32) et s'étendant dans un plan non parallèle à une direction axiale (8) de la coiffe (4).

7. Cage selon la revendication 6, **caractérisée en ce que** la patte de butée (40) présente deux faces planes non parallèles à une direction axiale (8) de la coiffe (4) et formant entre elles un angle obtus α.

8. Cage selon la revendication 6 ou 7, **caractérisée en ce que** la patte de butée (40) est d'une seule pièce avec la semelle (32).

9. Cage selon l'une quelconque des revendications 1 à 8, **caractérisée en ce que** la coiffe (4) comporte deux parois latérales (16, 18) adaptées à s'étendre perpendiculairement à la semelle (32) et présentant des échancrures (22) s'étendant depuis une extrémité axiale (10) de la coiffe (4).

10. Sous-ensemble pour moteur électrique comprenant une cage (2), un balai (48) adapté à être reçu à coulissement dans la cage et un ressort à bande (46) pour le rappel du balai, **caractérisé en ce que** la cage (2) est conforme à l'une des revendications précédentes.

11. Moteur électrique pour véhicule automobile, **caractérisé en ce qu'**il comporte une cage (2) selon l'une quelconque des revendications 1 à 9.

## Patentansprüche

1. Bürstenhalter (2) für einen Elektromotor, der eine Aufnahme für eine Kohlebürste (48) definiert und eine Kühlrippe (36) umfaßt, **dadurch gekennzeichnet, daß** der Bürstenhalter ein aus Metall ausgeführtes ebenes Fußstück (32) und eine Kappe (4) umfaßt, die die Aufnahme definieren und aus verschiedenen Teilen bestehen.

2. Bürstenhalter nach Anspruch 1, **dadurch gekennzeichnet, daß** das Fußstück (32) eine Abmessung (a) entlang einer zu einer axialen Richtung (8) der Kappe (4) senkrechten Querrichtung aufweist, die wenigstens gleich dem Zweifachen einer größeren Abmessung (p) der Kappe (4) entlang der Querrichtung ist.

3. Bürstenhalter nach Anspruch 1 oder 2, **dadurch gekennzeichnet, daß** sich die Kühlrippe (36) vom Fußstück (32) aus erstreckt.

4. Bürstenhalter nach einem der Ansprüche 1 bis 3, **dadurch gekennzeichnet, daß** sich die Kühlrippe (36) in einer zu einer axialen Richtung (8) der Kappe (4) parallelen Ebene erstreckt.

5. Bürstenhalter nach einem der Ansprüche 1 bis 4, **dadurch gekennzeichnet, daß** sich die Kühlrippe (36) in einer zum Fußstück (32) senkrechten Ebene erstreckt.

6. Bürstenhalter nach einem der Ansprüche 1 bis 5, **dadurch gekennzeichnet, daß** der Bürstenhalter (2) einen Anschlagansatz (40) umfaßt, der am Fußstück (32) befestigt ist und sich in einer zur einer axialen Richtung (8) der Kappe (4) nicht parallelen Richtung erstreckt.

7. Bürstenhalter nach Anspruch 6, **dadurch gekennzeichnet, daß** der Anschlagansatz (40) zwei zu einer axialen Richtung (8) der Kappe (4) nicht parallele ebene Flächen aufweist, die miteinander einen stumpfen Winkel (α) bilden.

8. Bürstenhalter nach Anspruch 6 oder 7, **dadurch gekennzeichnet, daß** der Anschlagansatz (40) einstückig mit dem Fußstück (32) ausgeführt ist.

9. Bürstenhalter nach einem der Ansprüche 1 bis 8, **dadurch gekennzeichnet, daß** die Kappe (4) zwei Seitenwände (16, 18) umfaßt, die sich senkrecht zum Fußstück (32) erstrecken können und Aussparungen (22) aufweisen, die sich von einem axialen Ende (10) der Kappe (4) aus erstrecken.

10. Untergruppe für einen Elektromotor, umfassend einen Bürstenhalter (2), eine Kohlebürste (48), die gleitend verschiebbar im Bürstenhalter aufgenommen werden kann, und eine Bandfeder (46) für die Rückstellung der Kohlebürste, **dadurch gekennzeichnet, daß** der Bürstenhalter (2) nach einem der vorangehenden Ansprüche ausgeführt ist.

11. Elektromotor für Kraftfahrzeuge, **dadurch gekennzeichnet, daß** er einen Bürstenhalter (2) nach einem der Ansprüche 1 bis 9 umfaßt.

## Claims

1. Cage (2) for an electric-motor brush defining a housing for a brush (48) and including a cooling fin (36), **characterised in that** the cage includes a flat metal sole plate (32) and a cap (4) defining the housing and consisting of two separate pieces.

2. Cage according to Claim 1, **characterised in that** the sole plate (32) features a dimension (a) along a transverse direction perpendicular to an axial direction (8) of the cap (4) which is at least equal to twice a larger dimension (p) of the cap (4) along the transverse direction.

3. Cage according to Claim 1 or 2, **characterised in that** the fin (36) extends from the sole plate (32).

4. Cage according to any one of Claims 1 to 3, **characterised in that** the fin (36) extends in a plane parallel to an axial direction (8) of the cap (4).

5. Cage according to any one of Claims 1 to 4, **characterised in that** the fin (36) extends in a plane perpendicular to the sole plate (32).

6. Cage according to any one of Claims 1 to 5, **characterised in that** the cage (2) includes an abutment lug (40) fixed to the sole plate (32) and extending in a plane not parallel to an axial direction (8) of the cap (4).

7. Cage according to Claim 6, **characterised in that** the abutment lug (40) features two flat faces not parallel to an axial direction (8) of the cap (4) and forming an obtuse angle α between them.

8. Cage according to Claim 6 or 7, **characterised in that** the abutment lug (40) is of a single piece with the sole plate (32).

9. Cage according to any one of Claims 1 to 8, **characterised in that** the cap (4) includes two side walls (16, 18) configured to extend perpendicularly to the sole plate (32) and featuring notches (22) extending from one axial end (10) of the cap (4).

10. Subassembly for an electric motor comprising a cage (2), a brush (48) suitable for being held so as to slide in the cage and a spring strip (46) for the return of the spring, **characterised in that** the cage (2) is in accordance with one of the preceding claims.

11. Electric motor for a motor vehicle, **characterised in that** it includes a cage (2) according to any one of Claims 1 to 9.
